(19) Europäisches Patentamt
European Patent Office
Office européen des brevets

(11) **EP 3 429 017 A1**

(12) **EUROPEAN PATENT APPLICATION**
published in accordance with Art. 153(4) EPC

(43) Date of publication:
**16.01.2019 Bulletin 2019/03**

(51) Int Cl.:
**H01M 10/0565** (2010.01)    **C08K 5/00** (2006.01)
**C08L 27/16** (2006.01)

(21) Application number: **17762792.4**

(22) Date of filing: **08.02.2017**

(86) International application number:
**PCT/JP2017/004553**

(87) International publication number:
**WO 2017/154448 (14.09.2017 Gazette 2017/37)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **10.03.2016 JP 2016047551**

(71) Applicant: **Kureha Corporation
Chuo-ku
Tokyo 103-8552 (JP)**

(72) Inventor: **WATANABE, Keisuke
Tokyo 103-8552 (JP)**

(74) Representative: **BRP Renaud & Partner mbB
Rechtsanwälte Patentanwälte
Steuerberater
Königstraße 28
70173 Stuttgart (DE)**

(54) **GEL ELECTROLYTE AND PREPARATION METHOD THEREOF**

(57)   Provided is a gel electrolyte that has a lower concentration of matrix polymer and that can maintain a gel state. The gel electrolyte contains a non-aqueous electrolyte solution in which a lithium-containing electrolyte is dissolved in a non-aqueous solvent and a matrix polymer, the matrix polymer being a copolymer containing a vinylidene fluoride unit and a fluorine atom-containing monomer unit as a repeating unit, and the crystallization temperature $T_c$ of the matrix polymer being within a range that satisfies the following Relationship (I) relative to the concentration C (mass%) of the matrix polymer included in the gel electrolyte:

$$T_c \geq 110 - C \ (I),$$

where $0.1 \leq C \leq 30$.

FIG. 1

EP 3 429 017 A1

**Description**

TECHNICAL FIELD

The present invention relates to a gel electrolyte and a method for preparing the gel electrolyte, and more particularly relates to a gel electrolyte containing a non-aqueous electrolyte solution in which a lithium-containing electrolyte is dissolved in a non-aqueous solvent and a matrix polymer and a method for preparing the gel electrolyte.

BACKGROUND ART

In recent years, batteries have been the focus of attention as power supplies for small portable devices such as smart phones, electric vehicles, and hybrid electric vehicles. Lithium ion batteries, which have a small volume and a large capacity, are presently a particular focus of attention among batteries.

Technical demands for batteries include reducing size and weight, increasing the degrees of freedom of the shape, and enhancing safety. To meet these demands, solid electrolytes such as an inorganic solid electrolyte, a polymer electrolyte, and a gel electrolyte, have been studied. In electrolyte solidification, using a gel electrolyte is presently the most promising from the perspective of ionic conductivity.

Patent Document 1 discloses a gel polymer electrolyte for a lithium-ion secondary battery including a gel composition containing a terpolymer of vinylidene fluoride, hexafluoropropene, and chlorotrifluoroethylene, and an organic solvent which can dissolve lithium salt.

CITATION LIST

Patent Literature

Patent Document 1: JP 2001-279044 A, (October 10, 2001)

SUMMARY OF INVENTION

Technical Problem

A gel electrolyte typically contains a non-aqueous electrolyte solution and a polymer. However, the polymer constituting the gel electrolyte itself does not directly contribute to battery capacity. Therefore, the amount of the polymer present in the gel electrolyte is preferably small. However, in a case where the gel electrolyte contains a larger amount of the non-aqueous electrolyte solution than the amount of the polymer, that is, in a case where the concentration of the polymer in the gel electrolyte is relatively low, the gel strength decreases and the gel state cannot be maintained. In a case where the gel state of the gel electrolyte cannot be maintained, the non-aqueous electrolyte solution leaks outside the battery, leading to a problem about reliability such as ignition of the battery.

The present invention is conceived in light of the problem described above, and an object of the present invention is to provide a gel electrolyte that has a lower concentration of polymer than typical gel electrolytes and that can maintain a gel state.

Solution to Problem

To solve the problem described above, the gel electrolyte according to an embodiment of the present invention is a gel electrolyte containing a non-aqueous electrolyte solution in which a lithium-containing electrolyte is dissolved in a non-aqueous solvent and a matrix polymer, the matrix polymer being a copolymer containing a vinylidene fluoride unit and a fluorine atom-containing monomer unit as a repeating unit, and the crystallization temperature $T_c$ of the matrix polymer being within a range that satisfies Relationship (I) below relative to the concentration C (mass%) of the matrix polymer included in the gel electrolyte.

$$T_c \geq 110 - C \ (I)$$

(where $0.1 \leq C \leq 30$)

To solve the problem described above, the method for preparing a gel electrolyte according to an embodiment of the present invention is a method for preparing a gel electrolyte containing a non-aqueous electrolyte solution in which a lithium-containing electrolyte is dissolved in a non-aqueous solvent and a matrix polymer, the method including mixing the non-aqueous electrolyte solution and the matrix polymer so that the crystallization temperature $T_c$ of the matrix polymer and the concentration C (mass%) of the matrix polymer included in the gel electrolyte satisfy Relationship (I) below.

$$T_c \geq 110 - C \ (I)$$

(where $0.1 \leq C \leq 30$)

Advantageous Effects of Invention

According to an embodiment of the present invention, a gel electrolyte that has a lower concentration of matrix polymer than typical gel electrolytes and that can maintain a gel state can be provided.

Brief Description of the Drawings

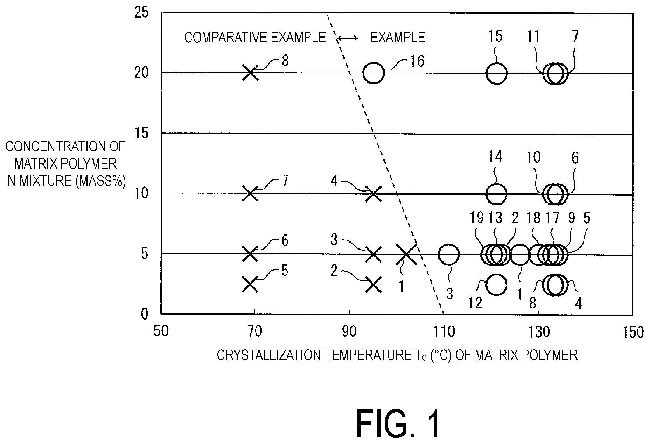

FIG. 1 is a graph showing a relationship between the crystallization temperature of the gel electrolyte and the concentration of the matrix polymer in the gel electrolyte according to an embodiment of the present invention.

Description of Embodiments

Hereinafter, embodiments of the present invention will be described.

The gel electrolyte according to an embodiment of the present invention is a gel electrolyte containing a non-aqueous electrolyte solution in which a lithium-containing electrolyte is dissolved in a non-aqueous solvent and a matrix polymer, the matrix polymer being a copolymer containing a vinylidene fluoride unit and a fluorine atom-containing monomer unit as a repeating unit, and the crystallization temperature $T_c$ of the matrix polymer being within a range that satisfies Relationship (I) below relative to the concentration C (mass%) of the matrix polymer included in the gel electrolyte:

$$T_c \geq 110 - C \ (I),$$

where $0.1 \leq C \leq 30$.

Note that the copolymer containing a vinylidene fluoride unit and a fluorine atom-containing monomer unit as a repeating unit refers to a copolymer using vinylidene fluoride and fluorine atom-containing monomers as a monomer, and containing a structure derived from vinylidene fluoride and a structure derived from a fluorine atom-containing monomer as a repeating unit.

Matrix polymer

The matrix polymer used for the gel electrolyte in the present embodiment is a copolymer containing a vinylidene fluoride unit and a fluorine atom-containing monomer unit as a repeating unit (that is, a vinylidene fluoride copolymer).

The concentration of the matrix polymer in the gel electrolyte of the present embodiment is not less than 0.1 mass% and not greater than 30 mass%. The lower limit of the concentration of the matrix polymer in the gel electrolyte is preferably not less than 0.5 mass%, and more preferably not less than 1.0 mass%. Also, the upper limit of the concentration of the matrix polymer in the gel electrolyte is preferably not greater than 20 mass%, and more preferably not greater than 15 mass%.

As the matrix polymer of the present embodiment, a matrix polymer is used in which, when the concentration of the matrix polymer in the gel electrolyte is defined as C (mass%), the crystallization temperature $T_c$ of the matrix polymer satisfies Relationship (I):

$$T_c \geq 110 - C \ (I).$$

Note that, in the present embodiment, the crystallization temperature $T_c$ of the matrix polymer can be measured by a known measurement method using, for example, a differential scanning calorimeter (DSC 1 available from mettler-Toledo International Inc.).

The weight average molecular weight of the matrix polymer is preferably from 100000 to 3000000, more preferably from 200000 to 2000000, and even more preferably from 300000 to 1500000.

Fluorine atom-containing monomer

The fluorine atom-containing monomer in the present embodiment is a compound containing a fluorine atom and intended to be a compound that can be used as a monomer component in polymerization. Non-limiting examples of the fluorine atom-containing monomer include compounds having a structure in which fluorine atoms are directly bonded to $sp^2$ carbon atoms such as hexafluoropropylene (HFP) and chlorotrifluoroethylene (CTFE), trifluoromethyl acrylate, vinyl trifluoromethyl ether, and trifluoro ethylene.

Preferred examples of the fluorine atom-containing monomer in the present embodiment include hexafluoropropylene (HFP) and chlorotrifluoroethylene (CTFE). Note that, hereinafter, the HFP and CTFE are also described as "fluorine-based monomer (A)". The matrix polymer in the present embodiment may contain only one type of fluorine atom-containing monomer, or also may contain two or more types of fluorine atom-containing monomers as the fluorine atom-containing monomer described above. In the matrix polymer in the present embodiment, the degree of crystallization is controlled as a result of containing the fluorine atom-containing monomer (for example, the fluorine-based monomer (A) described above), which imparts retention property to non-aqueous electrolyte solution.

Note that the content of the fluorine atom-containing monomer unit in the vinylidene fluoride copolymer is appropriately determined so that a target crystallization temperature $T_c$ can be achieved.

Other repeating units

The matrix polymer in the present embodiment may contain repeating units of vinylidene fluoride unit and fluorine atom-containing monomer unit, and may further contain other repeating units. Examples of the other repeating units include repeating units derived from unsaturated dibasic acid (hereinafter, unsaturated dibasic acid unit) and repeating units derived from unsaturated dibasic acid monoester (hereinafter, unsaturated dibasic acid monoester unit).

The matrix polymer may include both unsaturated dibasic acid units and unsaturated dibasic acid monoester units, or may include one of them. Note that the content of the other repeating units in the matrix polymer in the present embodiment is not particularly limited as long as basic physical properties as a copolymer containing a vinylidene fluoride unit and a fluorine atom-containing monomer unit as a repeating unit are not impaired.

Examples of the unsaturated dibasic acid that constitutes the unsaturated dibasic acid unit in the matrix polymer in the present embodiment include unsaturated disulfonic acids and unsaturated dicarboxylic acids. Examples of the unsaturated dicarboxylic acids include fumaric acid, maleic acid, maleic anhydride, and citraconic acid. Among them, maleic acid, maleic anhydride, and citraconic acid are preferred. In a case where the matrix polymer in the present embodiment contains an unsaturated dibasic acid unit, the matrix polymer may contain only one type of unsaturated dibasic acid unit, or two or more types of unsaturated dibasic acid units. Note that the content of the unsaturated dibasic acid in the matrix polymer in the present embodiment is not particularly limited as long as basic physical properties as a copolymer containing a vinylidene fluoride unit and a fluorine atom-containing monomer unit as a repeating unit are not impaired.

Examples of the unsaturated dibasic acid monoester that constitutes the unsaturated dibasic acid monoester unit in the matrix polymer in the present embodiment include unsaturated disulfonic acid monoesters and unsaturated dicarboxylic acid monoesters. Examples of the unsaturated dicarboxylic acid monoesters include fumaric acid monomethyl ester, fumaric acid monoethyl ester, maleic acid monomethyl ester, maleic acid monoethyl ester, citraconic acid monomethyl ester, and citraconic acid monoethyl ester. In a case where the matrix polymer in the present embodiment contains an unsaturated dibasic acid monoester unit, the matrix polymer may contain only one type of unsaturated dibasic acid monoester unit, or two or more types of unsaturated dibasic acid monoester units. Note that the content of the unsaturated dibasic acid monoester in the matrix polymer in the present embodiment is not particularly limited as long as basic physical properties as a copolymer containing a vinylidene fluoride unit and a fluorine atom-containing monomer unit as a repeating unit are not impaired.

In a case where the vinylidene fluoride copolymer contains an unsaturated dibasic acid unit or an unsaturated dibasic acid monoester unit, the gel electrolyte in the present embodiment, which contains functional groups such as a carboxy group of unsaturated dibasic acid in the matrix polymer, is easily gelated via hydrogen bonding between the functional groups.

Method for preparing matrix polymer

As the method for preparing the matrix polymer according to the present embodiment, known methods and conditions can be employed except the method and condition described below.

To prepare the matrix polymer in the present embodiment, the crystallization temperature of the matrix polymer in accordance with Relationship (I) above and the concentration of the matrix polymer in the gel electrolyte (mass%) are first determined. For example, in a case where a gel electrolyte having a matrix polymer concentration of 10 mass% is prepared, the value of 10 is substituted for C in Relationship (I), resulting in $T_c \geq 100$. Thus, the lower limit of the crystallization temperature of the matrix polymer can be determined to be 100°C. That is, the concentration of the matrix polymer in the gel electrolyte is determined, and then the lower limit of the crystallization temperature of the matrix polymer that satisfies Relationship (I) at the concentration can be determined. Alternatively, the crystallization temperature of the matrix polymer is first determined, and then the concentration of the vinylidene fluoride copolymer in the gel electrolyte that satisfies Relationship (I) at the crystallization temperature may be determined.

Once the crystallization temperature of the matrix polymer is determined, a vinylidene fluoride copolymer that satisfies the determined crystallization temperature may be produced. The crystallization temperature of the vinylidene fluoride copolymer basically depends on the amount of the fluorine atom-containing monomer (for example, fluorine-based monomer (A)) included in the matrix polymer and the method for introducing the fluorine atom-containing monomer. Accordingly, the amount of the fluorine atom-containing monomer included in the matrix polymer is first determined to prepare a matrix polymer having a desired crystallization temperature.

The crystallization temperature of a copolymer (vinylidene fluoride copolymer) formed by copolymerization of a fluorine atom-containing monomer (for example, fluorine-based monomer (A)) and vinylidene fluoride varies depending on the ratio of fluorine atom-containing monomer and vinylidene fluoride to be charged. In a case where the method for introducing the fluorine atom-containing monomer is the same, the crystallization temperature of the copolymer becomes lower than that of the homopolymer of the vinylidene fluoride as the ratio of fluorine atom-containing monomer to vinylidene fluoride increases.

Once the ratio of fluorine atom-containing monomer (for example, fluorine-based monomer (A)) and vinylidene fluoride to be charged is determined, the method for introducing the fluorine atom-containing monomer is then determined. Examples of the method for introducing the fluorine atom-containing monomer serving as a factor to determine the crystallization temperature of the vinylidene fluoride copolymer include charging the fluorine atom-containing monomer at a certain timing and charging the fluorine atom-containing monomer in the synthesis of the vinylidene fluoride copolymer in a certain manner, but the method is not limited thereto. Note that, examples of the timing and method for charging the fluorine atom-containing monomer include separately charging, continuously charging, or collectively charging the fluorine atom-containing monomer. A person skilled in the art can easily produce a vinylidene fluoride copolymer having a desired crystallization temperature based on the technical contents described above and common technical knowledge in this technical field.

Non-aqueous electrolyte solution

The non-aqueous electrolyte solution used for the gel electrolyte in the present embodiment is prepared by dissolving a lithium-containing electrolyte in a non-aqueous solvent. A known non-aqueous electrolyte solution used to obtain a gel electrolyte may be used as the non-aqueous electrolyte solution. Further, the gel electrolyte preferably contains from 70 to 99.9 parts by mass of the non-aqueous electrolyte solution, more preferably from 80 to 99.5 parts by mass of the non-aqueous electrolyte solution per 100 parts by mass of the gel electrolyte.

Lithium-containing electrolyte

Examples of the lithium-containing electrolyte in the present embodiment include electrolytes of lithium salt. Known lithium salt may be used as the lithium salt. Examples of the lithium-containing electrolyte include $LiPF_6$, $LiAsF_6$, $LiClO_4$, $LiBF_4$, $LiCl$, $LiBr$, $LiCH_3SO_3$, $LiCF_3SO_3$, $LiN(CF_3SO_2)_2$, and $LiC(CF_3SO_2)_3$. As the lithium-containing electrolyte used for the non-aqueous electrolyte solution in the present embodiment, only one type of lithium-containing electrolyte may be used, or two or more types of lithium-containing electrolytes may be used. The concentration of the lithium-containing electrolyte in the non-aqueous electrolyte solution is preferably from 0.1 to 3 mol/dm$^3$, and more preferably from 0.5 to 2 mol/dm$^3$.

Non-aqueous solvent

A known non-aqueous solvent may be used as the non-aqueous solvent used for the non-aqueous electrolyte solution in the present embodiment. Examples of the non-aqueous solvent include organic solvents such as ethylene carbonate, propylene carbonate, dimethyl carbonate, ethylmethyl carbonate, diethyl carbonate, dipropyl carbonate, methylpropyl carbonate, ethylpropyl carbonate, ethylbutyl carbonate, γ-butyrolactone, 1,2-dimethoxyethane, 1,2-diethoxyethane, methyl propionate, and ethyl propionate. As the non-aqueous solvent used for the non-aqueous electrolyte solution in the present embodiment, only one type of non-aqueous solvent among the non-aqueous solvents described above may be used, or a mixed solvent, in which at least two or more types of non-aqueous solvents among the non-aqueous solvents described above are mixed, may be used.

Method for preparing gel electrolyte

The method for preparing the gel electrolyte in the present embodiment includes mixing a non-aqueous electrolyte solution and a matrix polymer so that the crystallization temperature $T_c$ of the matrix polymer and the concentration C (mass%) of the matrix polymer included in the gel electrolyte satisfy Relationship (I):

$$Tc \geq 110 - C \text{ (I)},$$

where $0.1 \leq C \leq 30$. The method for preparing the gel electrolyte in the present embodiment will be described below.

In the present embodiment, means for mixing the non-aqueous electrolyte solution and the matrix polymer to form the gel electrolyte is not particularly limited. In one aspect of the method for preparing the gel electrolyte according to the present embodiment, a volatile organic solvent for dissolving the matrix polymer is further mixed to obtain a gel electrolyte. That is, one aspect of the method for preparing the gel electrolyte according to the present embodiment includes obtaining a film-like gel electrolyte via a process of mixing a matrix polymer, a non-aqueous electrolyte solution, and a volatile organic solvent for dissolving the matrix polymer and then volatilizing the volatile organic solvent from the obtained mixture. Another aspect includes mixing a matrix polymer and a volatile organic solvent for dissolving the matrix polymer to prepare a solution in which the vinylidene fluoride copolymer is dissolved. Then, the solution and the non-aqueous electrolyte solution are mixed. Then, a film-like gel electrolyte is obtained via a process of volatilizing the volatile organic solvent from the obtained mixture. The mixing of these components in these aspects is ordinarily performed under a heated condition and preferably at 40 to 150°C. In addition, the process of volatilizing the volatile organic solvent is ordinarily performed at 0 to 100°C and preferably at 15 to 60°C.

The non-aqueous electrolyte solution and the matrix polymer are mixed so that the concentration of the matrix polymer in the gel electrolyte that is finally obtained falls within the range from 0.1 to 30 mass%, preferably within the range from 0.5 to 20 mass%.

The volatile organic solvent according to the present embodiment is preferably a solvent which has a high vapor pressure at a relatively low temperature, is easy to volatilize, and readily dissolves the matrix polymer. Examples of the volatile organic solvent include tetrahydrofuran, methyl tetrahydrofuran, acetone, methyl ethylketone, 1,3-dioxolane, cyclohexanone, dimethyl carbonate, diethyl carbonate, and ethyl methyl carbonate, but the volatile organic solvent is not necessarily limited thereto.

The added amount of the volatile organic solvent used for the method according to the present embodiment may be an amount such that the matrix polymer can be sufficiently dissolved and may be appropriately adjusted according to the matrix polymer.

Note that, among the non-aqueous solvents used for the non-aqueous electrolyte solution described above, organic solvents such as propylene carbonate, ethylene carbonate, and dimethyl carbonate can also be used as a solvent for the matrix polymer. Thus, in a case where these solvents are employed for the non-aqueous solvent used for the non-aqueous electrolyte solution, the gel electrolyte can be prepared without the volatile organic solvent.

For example, in a case where propylene carbonate, ethylene carbonate, dimethyl carbonate, and the like are used as the non-aqueous solvent, a lithium-containing electrolyte may be further added and dissolved in a solution in which the matrix polymer is dissolved in the non-aqueous solvents. Alternatively, the matrix polymer and the lithium-containing electrolyte may be dissolved at the same time in the non-aqueous solvents. These processes are ordinarily performed under heated conditions and preferably at 40 to 150°C. A film-like gel electrolyte can be obtained by cooling the solution in which the matrix polymer and the lithium-containing electrolyte are dissolved to room temperature.

Furthermore, in another example of the method for preparing a gel electrolyte, a gel electrolyte can also be obtained by forming a matrix polymer (vinylidene fluoride copolymer) into a film and then swelling the film with a non-aqueous electrolyte solution.

According to the method for preparing a gel electrolyte, a gel electrolyte that has a lower concentration of a matrix polymer than typical gel electrolytes and maintains a gel state, and thus achieves high reliability can be provided.

Non-aqueous electrolyte battery

The gel electrolyte according to an embodiment of the present invention can be used for a member in a non-aqueous electrolyte battery. Herein, the non-aqueous electrolyte battery is a battery having a structure in which a gel electrolyte is provided between a positive electrode and a negative electrode. Examples of the non-aqueous electrolyte battery include a lithium-ion secondary battery, but the non-aqueous electrolyte battery is not limited thereto. Known methods may be used as the method for preparing a non-aqueous electrolyte battery.

Summary

To solve the problem described above, the gel electrolyte according to an embodiment of the present invention is a gel electrolyte containing a non-aqueous electrolyte solution in which a lithium-containing electrolyte is dissolved in a non-aqueous solvent and a matrix polymer, the matrix polymer being a copolymer containing a vinylidene fluoride unit and a fluorine atom-containing monomer unit as a repeating unit, and the crystallization temperature $T_c$ of the matrix polymer being within a range that satisfies Relationship (I) below relative to the concentration C (mass%) of the matrix polymer included in the gel electrolyte.

$$T_c \geq 110 - C \ (I)$$

(where $0.1 \leq C \leq 30$)

In the gel electrolyte according to an embodiment of the present invention, the copolymer described above preferably further contains at least one of a repeating unit derived from unsaturated dibasic acid and a repeating unit derived from unsaturated dibasic acid monoester.

In the gel electrolyte according to an embodiment of the present invention, the unsaturated dibasic acid is preferably unsaturated dicarboxylic acid, and the unsaturated dibasic acid monoester is preferably unsaturated dicarboxylic acid monoester.

In the gel electrolyte according to an embodiment of the present invention, the fluorine atom-containing monomer unit is preferably a repeating unit derived from hexafluoropropylene or a repeating unit derived from chlorotrifluoroethylene.

In the gel electrolyte according to an embodiment of the present invention, the non-aqueous solvent is preferably ethylene carbonate, propylene carbonate, dimethyl carbonate, ethylmethyl carbonate, diethyl carbonate, dipropyl carbonate, methylpropyl carbonate, ethylpropyl carbonate, ethylbutyl carbonate, γ-butyrolactone, 1,2-dimethoxyethane, 1,2-diethoxyethane, methyl propionate, or ethyl propionate, or a mixed solvent of at least two of these substances.

To solve the problem described above, the method for preparing a gel electrolyte according to an embodiment of the present invention is a method for preparing a gel electrolyte containing a non-aqueous electrolyte solution in which a lithium-containing electrolyte is dissolved in a non-aqueous solvent and a matrix polymer, the method including mixing the non-aqueous electrolyte solution and the matrix polymer so that the crystallization temperature $T_c$ of the matrix polymer and the concentration C (mass%) of the matrix polymer included in the gel electrolyte satisfy Relationship (I) below.

$$T_c \geq 110 - C \ (I)$$

(where $0.1 \leq C \leq 30$)

Embodiments of the present invention will be described in further detail hereinafter using examples. The present invention is not limited to the examples below, and it goes without saying that various aspects are possible with regard to the details thereof. Furthermore, the present invention is not limited to the embodiments described above, and various modifications are possible within the scope indicated in the claims. Embodiments obtained by appropriately combining the technical means disclosed by the embodiments are also included in the technical scope of the present invention. In addition, all of the documents disclosed in the present specification are hereby incorporated by reference.

Examples

First, the method for evaluating gelation by a matrix polymer will be described prior to the description of examples in which the gel electrolyte according to an embodiment of the present invention was prepared.

Method for confirming gelation

The confirmation of gelation by a matrix polymer was performed by the inversion method. Specifically, a predetermined amount of the matrix polymer was heated and dissolved in the non-aqueous electrolyte solution, and then cooled down to room temperature. The container containing the gel electrolyte was appropriately turned over and the flowability of the content was observed. The case where the content exhibited no flowability within 3 days was evaluated as being gelated. The case where the gelation of the content was not confirmed within 3 days was evaluated as not being gelated.

Example 1

Method for preparing matrix polymer

First, 1060 g of ion-exchanged water, 0.62 g of Metolose SM-100, 2.18 g of a 50 mass% di-i-propyl peroxy dicarbonate-1,1,2,2-tetrafluoroethyl-2,2,2-trifluoroethyl ether solution, 390 g of vinylidene fluoride, 20 g of hexafluoropropylene, and 2.06 g of monomethyl maleate were charged into an autoclave with an internal volume of 2 liters. The liquid mixture was polymerized by heating the liquid mixture to 29°C for 1 hour and then maintaining 29°C for 42.8 hours from the starting of temperature elevation.

After polymerization was ended, the polymer slurry was heat-treated for 60 minutes at 95°C. The polymer slurry was then filtered and dehydrated, washed with water, and dried for 20 hours at 80°C to obtain a polymer powder. Polymerization yield was 80%. Hereinafter, the obtained polymer is denoted as polymer A.

Measurement of crystallization temperature

Powder polymer A was preliminarily heated at 200°C for 30 seconds using a compression molding machine AYSR-5 available from SHINTO Metal Industries Corporation. After the preliminarily heating, the polymer was heat-pressed with a cylinder pressure of 10 MPa to obtain a sheet. Then, 10 mg of piece of sheet was cut out from the formed sheet and used as a sample for measuring crystallization temperature. The crystallization temperature was measured using a differential scanning calorimeter (DSC1 available from Mettler-Toledo International Inc.) while increasing and decreasing the temperature in range of 30°C to 230°C at a rate of 10°C/min. The crystallization temperature ($T_c$) of the polymer A was 126°C.

Gelation test

A solution in which 1 mol/dm$^3$ of LiClO$_4$ as a lithium-containing electrolyte was dissolved in propylene carbonate (PC) and dimethyl carbonate (DMC) (mass ratio: 3:7), and polymer A were mixed so that the concentration of the matrix polymer was 5 mass%. The mixture was heated with stirring in a water bath at 65°C for 3 hours. Then, the mixture was cooled down to room temperature and the gelation of the mixture was confirmed by the inversion method.

Note that the crystallization temperature of the matrix polymer and the concentration of the matrix polymer in the mixture that was finally prepared in this example and later examples satisfy Relationship (I) described above.

Example 2

Polymer B was obtained by the method for preparing the matrix polymer in Example 1 except that the copolymerization ratio of vinylidene fluoride (VDF), hexafluoropropylene (HFP), and monomethyl maleate (MMM) was adjusted so that the crystallization temperature of the matrix polymer was 122°C. The same gelation test as Example 1 was performed except for using polymer B as the matrix polymer.

Example 3

Polymer C was obtained by the method for preparing the matrix polymer in Example 1 except that the copolymerization ratio of VDF, HFP, and MMM was adjusted so that the crystallization temperature of the matrix polymer was 111°C. The same gelation test as Example 1 was performed except for using polymer C as the matrix polymer.

Example 4

Polymer D was obtained by the method for preparing the matrix polymer in Example 1 except that MMM was not used and the copolymerization ratio of VDF and HFP was adjusted so that the crystallization temperature of the matrix polymer was 134°C. The same gelation test as Example 1 was performed except for using polymer D as the matrix polymer and setting the concentration of the matrix polymer to 2.5 mass%.

Example 5

The same gelation test as Example 4 was performed except for setting the concentration of the matrix polymer to 5 mass%.

Example 6

The same gelation test as Example 4 was performed except for setting the concentration of the matrix polymer to 10 mass%.

Example 7

The same gelation test as Example 4 was performed except for setting the concentration of the matrix polymer to 20 mass%.

Example 8

Polymer E was obtained by the method for preparing the matrix polymer in Example 1 except that MMM was not used and the copolymerization ratio of VDF and HFP was adjusted so that the crystallization temperature of the matrix polymer was 133°C. The same gelation test as Example 1 was performed except for using polymer E as the matrix polymer and setting the concentration of the matrix polymer to 2.5 mass%.

Example 9

The same gelation test as Example 8 was performed except for setting the concentration of the matrix polymer to 5 mass%.

Example 10

The same gelation test as Example 8 was performed except for setting the concentration of the matrix polymer to 10 mass%.

Example 11

The same gelation test as Example 8 was performed except for setting the concentration of the matrix polymer to 20 mass%.

Example 12

Polymer F was obtained by the method for preparing the matrix polymer in Example 1 except that MMM was not used and the copolymerization ratio of VDF and HFP was adjusted so that the crystallization temperature of the matrix polymer was 121°C. The same gelation test as Example 1 was performed except for using polymer F as the matrix polymer and setting the concentration of the matrix polymer to 2.5 mass%.

Example 13

The same gelation test as Example 12 was performed except for setting the concentration of the matrix polymer to 5 mass%.

Example 14

The same gelation test as Example 12 was performed except for setting the concentration of the matrix polymer to 10 mass%.

Example 15

The same gelation test as Example 12 was performed except for setting the concentration of the matrix polymer to 20 mass%.

Example 16

Polymer G was obtained by the method for preparing the matrix polymer in Example 1 except that MMM was not used and the copolymerization ratio of VDF and HFP was adjusted so that the crystallization temperature of the matrix polymer was 95°C. The same gelation test as Example 1 was performed except for using polymer G as the matrix polymer and setting the concentration of the matrix polymer to 20 mass%.

Example 17

Polymer H was obtained by the method for preparing the matrix polymer in Example 1 except that chlorotrifluoroethylene (CTFE) was used in place of MMM and HFP, and the copolymerization ratio of VDF and CTFE was adjusted so that the crystallization temperature of the matrix polymer was 132°C. The same gelation test as Example 1 was performed except for using polymer H as the matrix polymer.

Example 18

Polymer J was obtained by the method for preparing the matrix polymer in Example 1 except that CTFE was used in place of MMM and HFP, and the copolymerization ratio of VDF and CTFE was adjusted so that the crystallization temperature of the matrix polymer was 130°C. The same gelation test as Example 1 was performed except for using polymer J as the matrix polymer.

Example 19

Polymer K was obtained by the method for preparing the matrix polymer in Example 1 except that CTFE was used in place of HFP and the copolymerization ratio of VDF, CTFE, and MMM was adjusted so that the crystallization temperature of the matrix polymer was 120°C. The same gelation test as Example 1 was performed except for using polymer K as the matrix polymer.

Comparative Example 1

Polymer L was obtained by the method for preparing the matrix polymer in Example 1 except that the copolymerization ratio of VDF, HFP, and MMM was adjusted so that the crystallization temperature of the matrix polymer was 102°C. The same gelation test as Example 1 was performed except for using polymer L as the matrix polymer. Note that the crystallization temperature of the matrix polymer and the concentration of the matrix polymer in the mixture that was finally prepared in this comparative example and later comparative examples did not satisfy Relationship (I) described above.

Comparative Example 2

The same gelation test as Example 1 was performed except for using polymer G as the matrix polymer and setting the concentration of the matrix polymer to 2.5 mass%.

Comparative Example 3

The same gelation test as Comparative Example 2 was performed except for setting the concentration of the matrix polymer to 5 mass%.

Comparative Example 4

The same gelation test as Comparative Example 2 was performed except for setting the concentration of the matrix polymer to 10 mass%.

Comparative Example 5

Polymer M was obtained by the method for preparing the matrix polymer in Example 1 except that MMM was not used and the copolymerization ratio of VDF and HFP was adjusted so that the crystallization temperature of the matrix polymer was 69°C. The same gelation test as Example 1 was performed except for using polymer M as the matrix polymer and setting the concentration of the matrix polymer to 2.5 mass%.

Comparative Example 6

The same gelation test as Comparative Example 5 was performed except for setting the concentration of the matrix polymer to 5 mass%.

Comparative Example 7

The same gelation test as Comparative Example 5 was performed except for setting the concentration of the matrix polymer to 10 mass%.

Comparative Example 8

The same gelation test as Comparative Example 5 was performed except for setting the concentration of the matrix polymer to 20 mass%.

FIG. 1 is a graph showing the relationship between the crystallization temperature of the matrix polymer and the concentration of the matrix polymer in Examples 1 to 19 and Comparative Examples 1 to 8. The vertical axis indicates the concentration C (mass%) of the matrix polymer in the mixture that was finally prepared and the horizontal axis indicates the crystallization temperature $T_c$ (°C) of the matrix polymer. The number assigned to the circle mark or the cross mark denotes the number of Examples and Comparative Examples. The circle mark denotes that the mixture that was finally prepared was gelated, and the cross mark denotes that the mixture that was finally prepared was not gelated. The dotted line in the graph of FIG. 1 denotes Relationship (I) in the case where an inequality sign is replaced with an equality sign.

As shown in FIG. 1, in Examples 1 to 19, which employed a matrix polymer having a crystallization temperature that satisfies Relationship (I) in the range of polymer concentration C of 0.5 to 20, the mixture that was finally prepared was gelated. That is, the mixture that was finally prepared became a gel electrolyte.

Industrial Applicability

The gel electrolyte according to the present invention can be suitably used as a gel electrolyte in a non-aqueous electrolyte secondary battery.

**Claims**

1. A gel electrolyte comprising:

   a non-aqueous electrolyte solution in which a lithium-containing electrolyte is dissolved in a non-aqueous solvent; and
   a matrix polymer;
   the matrix polymer being a copolymer containing a vinylidene fluoride unit and a fluorine atom-containing monomer unit as a repeating unit; and
   a crystallization temperature $T_c$ of the matrix polymer being within a range that satisfies Relationship (I) relative to a concentration C (mass%) of the matrix polymer included in the gel electrolyte:

$$Tc \geq 110 - C \ (I),$$

   where $0.1 \leq C \leq 30$.

2. The gel electrolyte according to claim 1, wherein the copolymer further contains at least one of a repeating unit derived from unsaturated dibasic acid and a repeating unit derived from unsaturated dibasic acid monoester.

3. The gel electrolyte according to claim 2, wherein the unsaturated dibasic acid is unsaturated dicarboxylic acid, and the unsaturated dibasic acid monoester is unsaturated dicarboxylic acid monoester.

4. The gel electrolyte according to any one of claims 1 to 3, wherein the fluorine atom-containing monomer unit is a repeating unit derived from hexafluoropropylene or a repeating unit derived from chlorotrifluoroethylene.

5. The gel electrolyte according to any one of claims 1 to 4, wherein the non-aqueous solvent is ethylene carbonate, propylene carbonate, dimethyl carbonate, ethylmethyl carbonate, diethyl carbonate, dipropyl carbonate, methylpropyl carbonate, ethylpropyl carbonate, ethylbutyl carbonate, $\gamma$-butyrolactone, 1,2-dimethoxyethane, 1,2-diethoxyethane, methyl propionate or ethyl propionate, or a mixed solvent of at least two of these substances.

6. A method for preparing a gel electrolyte containing a non-aqueous electrolyte solution in which a lithium-containing electrolyte is dissolved in a non-aqueous solvent and a matrix polymer, the method comprising:
   mixing the non-aqueous electrolyte solution and the matrix polymer so that a crystallization temperature $T_c$ of the matrix polymer and a concentration C (mass%) of the matrix polymer included in the gel electrolyte satisfy Relationship (I):

$$T_c \geq 110 - C \ (I),$$

where $0.1 \leq C \leq 30$.

FIG. 1

## INTERNATIONAL SEARCH REPORT

| International application No. |
|---|
| PCT/JP2017/004553 |

**A. CLASSIFICATION OF SUBJECT MATTER**
*H01M10/0565*(2010.01)i, *C08K5/00*(2006.01)i, *C08L27/16*(2006.01)i

According to International Patent Classification (IPC) or to both national classification and IPC

**B. FIELDS SEARCHED**

Minimum documentation searched (classification system followed by classification symbols)
H01M10/0565, C08K5/00, C08L27/16

Documentation searched other than minimum documentation to the extent that such documents are included in the fields searched
Jitsuyo Shinan Koho       1922–1996   Jitsuyo Shinan Toroku Koho   1996–2017
Kokai Jitsuyo Shinan Koho   1971–2017   Toroku Jitsuyo Shinan Koho   1994–2017

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2015/137137 A1   (Kureha Corp.),<br>17 September 2015 (17.09.2015),<br>claims; examples<br>& JP 2015-172101 A       & US 2017/0015772 A1<br>claims; examples<br>& EP 3118230 A1         & KR 10-2016-0114110 A<br>& CN 106103508 A | 1–6 |
| A | JP 2009-224309 A  (Nissan Motor Co., Ltd.),<br>01 October 2009 (01.10.2009),<br>claims; examples<br>& US 2010/0255371 A1<br>claims; examples<br>& WO 2009/054334 A1     & EP 2214247 A1<br>& KR 10-2010-0075533 A   & CN 101836323 A | 1–6 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>10 April 2017 (10.04.17) | Date of mailing of the international search report<br>18 April 2017 (18.04.17) |
|---|---|
| Name and mailing address of the ISA/<br>Japan Patent Office<br>3-4-3,Kasumigaseki,Chiyoda-ku,<br>Tokyo 100-8915,Japan | Authorized officer<br><br>Telephone No. |

Form PCT/ISA/210 (second sheet) (January 2015)

**INTERNATIONAL SEARCH REPORT**

| International application No. |
| --- |
| PCT/JP2017/004553 |

C (Continuation).    DOCUMENTS CONSIDERED TO BE RELEVANT

| Category* | Citation of document, with indication, where appropriate, of the relevant passages | Relevant to claim No. |
| --- | --- | --- |
| A | JP 2010-147031 A  (Sony Corp.),<br>01 July 2010 (01.07.2010),<br>claims; examples<br>(Family: none) | 1-6 |
| A | JP 2013-194112 A  (JSR Corp.),<br>30 September 2013 (30.09.2013),<br>claims; examples<br>(Family: none) | 1-6 |
| A | WO 2011/096564 A1  (Daikin Industries, Ltd.),<br>11 August 2011 (11.08.2011),<br>claims; examples<br>& US 2012/0301794 A1<br>claims; examples<br>& CN 102754267 A          & KR 10-2012-0136355 A | 1-6 |

Form PCT/ISA/210 (continuation of second sheet) (January 2015)

**EP 3 429 017 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001279044 A